# EUROPEAN PATENT APPLICATION

(11) **EP 4 665 081 A1**
(43) Date of publication of application: **17.12.2025**
(21) Application number: 24181691.7
(22) Date of filing: 12.06.2024
(51) Int. Cl.: H04W 84/20

(54) **APPARATUS, COMPUTER-READABLE DATA CARRIER, COMPUTER PROGRAM, AND METHODS FOR DIRECT WIRELESS COMMUNICATION**

(71) Applicant: AUMOVIO Germany GmbH, 60488 Frankfurt am Main (DE)
(72) Inventor: Kim, SoHyeong, Sejong-si, 339-942 (KR)
(74) Representative: Aumovio Corporation

(57) **Abstract**

Embodiments relate to an apparatus, a computer-readable data carrier, a computer program, and methods for direct wireless communication. The method comprises appointing a first device as the group owner of the communication group. Further, the method comprises appointing a second device of the communication group as the group owner. Also, the method includes maintaining the communication session or reestablishing a communication session for the communication group with the second device as the group owner if the first device leaves the communication session.

## Description

Embodiments relate to an apparatus, a computer-readable data carrier, a computer program, and methods for direct wireless communication. In particular, the present disclosure relates to a concept for maintaining a communication session or reestablishing a communication session for a communication group if a group owner leaves the communication session.

With the application of telematics and infotainment technologies in vehicles, the amount of data to be processed and communicated has increased. To deal with this, IEEE 802.3 (Ethernet), a current wired communication technology, was applied to vehicles to provide a higher bandwidth of 100 Mbps than the existing CAN communication of 1 Mbps. However, in the case of Ethernet, there is a disadvantage that communication is impossible without a connector. Connectors and equipment must be required for communication between ECUs or between external equipment. There is also a problem that there are limitations depending on L2 Switch (ESU) performance. To compensate for these shortcomings, Wi-Fi Direct technology is being applied to vehicles as higher bandwidth in the Giga band is needed. However, in the case of Wi-Fi Direct, when the GO (Group Owner) leaves a communication session, all GCs (Group Clients) are notified that the P2P Group Session has been terminated through "de-authentication". That is, the group session is terminated, and reconnection may be required. This may delay the communication of information.

Hence, there may be a demand of an improved concept for wireless communication.

This demand may be satisfied by the subject-matter of the appended independent claims. Optional embodiments thereof are disclosed by the appended dependent claims.

Embodiments provide a method for direct wireless communication within a communication group comprising multiple devices. The method comprises appointing a first device as the group owner of the communication group. Further, the method comprises appointing a second device of the communication group as the group owner. Also, the method includes maintaining the communication session or reestablishing a communication session for the communication group with the second device as the group owner if the first device leaves the communication session.

In doing so, it may be avoided that the communication session is terminated and/or interrupted (for too long). In this way, delays in the communication of data and/or information may be reduced and/or ideally avoided.

In some embodiments, the method comprises establishing first connections between the first device and one or more other devices of the communication group. In such case, maintaining or reestablishing the communication session may comprise establishing second connections between the second device and one or more other devices for maintaining the communication session.

In particular, maintaining the communication session may comprise terminating the first connections when the second connections are established. In this way, interruptions of the communication session may be avoided.

As a skilled person will appreciate, the approach proposed herein may be applied for different applications including, e.g., automotive or network applications.

Accordingly, at least one of the devices in the communication group may comprise an electronic control unit (ECU) for a vehicle. In this way, reliable communication with the ECU may be achieved.

The skilled person will understand, that the proposed approach may be implemented separately on different nodes of a network. In particular, the proposed approach suggests separate methods for a group owner and a group client of a communication group.

So, embodiments of the present disclosure provide a method for a first device being a group owner and for direct wireless communication within a communication group including the group owner and one or more second devices being group clients. The method for the group owner comprises transmitting information indicating that the first device will leave a communication session of the communication group to one or more group clients of the communication group for appointing one of the group clients as group owner to maintain or reestablish the communication session.

Also, embodiments of the present disclosure provide a method for a group client and for direct wireless communication within a communication group including at least one first device being a group owner of the communication group and a second device being the group client. This method comprises determining if the second device is appointed as the group owner and maintaining or reestablishing a communication session of the communication group with the second device as group owner of the communication group when the first device leaves the communication session.

In practice, maintaining or reestablishing the communication session may comprise transmitting an invite to one or more other group clients of the communication group for the other group clients to establish a connection with the communication group.

In some embodiments, determining if the second device is appointed as the group owner comprises determining if the second device is appointed as the group owner when the first device leaves the communication session and determining if the first device leaves or left the communication session.

It is noted, that the proposed approach may be at least partly implemented as a computer program and/or computer implemented method. So, steps and/or features of described embodiments may be implemented in a computer program which when it is executed by a computer or any kind of programmable hardware causes the computer or hardware to execute one or more steps or parts of the proposed approach.

So, some embodiments provide a computer program comprising instructions which, when the computer program is executed by a computer, cause the computer to carry out an embodiment of one or more of the proposed methods.

Further embodiments, provide a computer-readable data carrier having stored thereon an embodiment of the proposed computer program.

Still further embodiments provide an apparatus comprising one or more interfaces for communication and a data processing circuit configured to execute an embodiment of one or more of the proposed methods.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a flow chart schematically illustrating an embodiment of a method for direct wireless communication within a communication group comprising multiple devices;
Fig. 2 schematically visualizes a communication group of multiple ECUs and an attack thereon;
Fig. 3 illustrates schematically how the group owner changes according to an embodiment of the present disclosure; and
Fig. 4 shows a block diagram schematically illustrating an apparatus in accordance with the proposed approach.

When an Internet communication group needs to be reestablished due to the departure of the group owner, it can potentially come vulnerable to various types of attacks including, e.g., spoofing attacks, man-in-the-middle attacks, denial of service attacks, and/or replay attacks. In doing so, an attacker may gain access to a system. This may allow the attacker to manipulate the system and/or retrieve and/or manipulate sensitive data or information.

For example, during the reestablishment process, attackers can exploit vulnerabilities in the group management protocols or weaknesses in authentication mechanisms to impersonate legitimate members of the group. They may attempt to masquerade as the departed group owner or other trusted members to gain unauthorized access to the group. Once the attackers successfully spoof their identities within the reestablished communication group, they can engage in various malicious activities, including eavesdropping on sensitive communications, injecting false information, manipulating data, or launching further attacks against the group or its members.

The proposed approach provides a solution to avoid interruption of the communication session and/or for a secure reestablishment of the communication session.

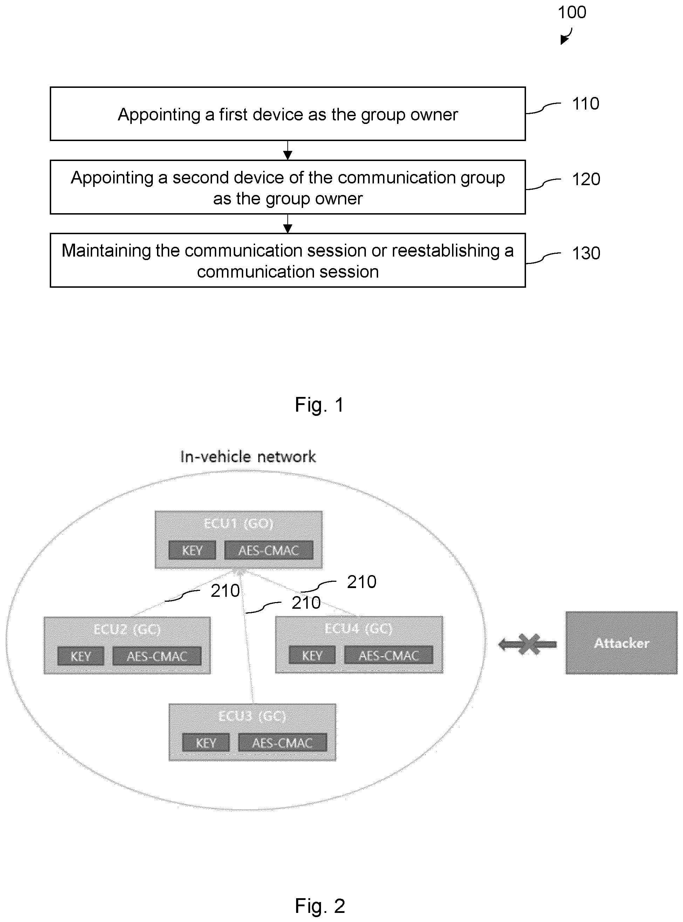

Further features and aspects of the proposed approach are now laid out in more detail below with reference to Fig. 1.

In particular, the proposed approach may be applied in an automotive application, e.g., for communication between or within vehicles. So, embodiments of the proposed approach may be implemented in one or more nodes of a vehicle network (e.g., in one or more ECUs of a vehicle), as laid out in more detail below.

Fig. 1 shows a flow chart schematically illustrating an embodiment of a method 100 for direct wireless communication within a communication group comprising multiple devices.

In the context of the present disclosure and direct wireless communication, a communication group refers to a collection of devices that are connected to each other directly over a wireless (communication) network without the need for a wireless access point (AP) (see, e.g., Wi-Fi Direct standard). As, e.g., according to the Wi-Fi Direct standard, the communication group may comprise peer-to-peer connections between nodes of the communication group. Such direct connections may enable them to communicate and share data with each other seamlessly.

For forming the communication group, one device/node may act as group owner (GO), while one or more other devices/node may join as group clients (GCs). The GO is responsible for managing the communication within the communication group.

In doing so, the GO may be responsible for creating and maintaining the communication group. It controls the communication group's parameters and facilitates communication between group members (GO & GCs). The GO may have higher authority in the group and may have additional responsibilities, such as managing security settings and assigning IP addresses to other group members/GCs.

The method 100 suggests appointing 110 a first device as the group owner of the communication group.

To this end, the first device may indicate its intent to become the group owner during a negotiation process for forming the communication group. This could be based on factors such as device capabilities, power status, or user preferences. Devices capable of serving as group owners may actively seek this role, while others may prefer to join as clients.

For this, devices may exchange information about their capabilities, including their ability to serve as group owners, during the negotiation process. This exchange allows to make informed decisions about which device should assume the role of the group owner based on factors such as device capabilities, power source, and/or network requirements.

For this, priority mechanisms may be applied to determine which device is (preferably) selected as the group owner. For example, devices with higher processing power, better network connectivity, and/or specific user preferences may be given priority in becoming the group owner.

Alternatively, the group owner may be manually chosen by a user.

Other devices may join as group clients. For this, a discovery and advertisement mechanism may be applied for a devised to discover the group owner and the communication group and to advertise the presence of the group owner to a nearby devices which are seeking to connect.

Once a group client identifies the group owner through the discovery process, it initiates a connection request to join the communication group. This connection request may be initiated manually by the user or automatically by the device, depending on the device's configuration and user preferences.

After receiving a connection request from a group client, the group owner authenticates the client and establishes a secure association between the client and the group. Authentication mechanisms may include methods such as WPS (Wi-Fi Protected Setup) or other authentication protocols supported (by Wi-Fi Direct).

Once authenticated, the group owner configures the network parameters for the group client, including assigning IP addresses, setting up encryption keys, and configuring other network settings as necessary. The group owner and client devices perform a handshake process to establish communication parameters and synchronize their connection.

Devices that join the communication group as clients may connect directly to the group owner and may communicate with each other through the group owner, forming a peer-to-peer network. In doing so, group members can exchange data, share resources, or collaborate on tasks within the communication group.

Some applications of the proposed approach may support dynamic group formation, allowing devices to join or leave the communication group dynamically as needed. This flexibility enables spontaneous connections between devices without requiring pre-existing infrastructure or network configurations.

As visualized in Fig. 2, the group members may include ECUs (for a vehicle). In Fig. 2, ECU1 is appointed and acts as the group owner and ECU2, ECU3, and ECU4 act as/are group clients.

In the automotive application of Fig. 2, the communication group may be formed when an ignition of the vehicle is turned on or when selecting a Wireless Service through a user interface (UI), one ECU (e.g, ECU1) sends an invite message (to ECU2, ECU3, and ECU4. Accordingly, ECUs that provide Wireless Service respond to the invite message to establish a connection, and a communication group is formed in the vehicle. To limit connection with other vehicles and to form an internal network of vehicles, secondary types (values or identifiers) in the message may be used to prevent communication interference between manufacturers and vehicles. This value, e.g., uses an in-vehicle unique identification number and AES-CMAC, where the key is stored in Secure storage.

In the negotiation process in the present example, the group owner may be determined based on a group owner intent value indicating how much a device (ECU) intends to become the group owner. By exchanging this value, the ECU with the highest value becomes GO. The GO priority between ECUs in the vehicle is predefined so that the ECU (e.g. ECU1) with the highest GO priority always uses the promised Group Owner Intent value for each ECU to act as a Group Owner. The group owner collects each group client list through probe request / response and shares the ECU list within the group. The ECU List may be encrypted with a pre-promised or predefined Key and then transmitted. Thereafter, direct communication between the ECUs may be possible within one group, and a communication state of each ECU may be identified.

As further visualized, various security measures including, e.g., encryption, authentication, and/or security protocols may be applied for protection against attackers or attacks (as schematically indicated by Fig. 2). In practice, e.g., Wi-Fi Protected Setup (WPS), Wi-Fi Protected Access 2 - Pre-Shared Key, and/or Advanced Encryption Standard (AES) Encryption (e.g., AES-CMAC (Cipher-based Message Authentication Code)) may be applied.

As in various applications, the group owner (first device) may (need to) leave the communication group/communication session because the group owner actively intends to leave the communication group/communication session or the group owner becomes unavailable, e.g., due to explicit user action, timeout or inactivity, network disruptions, protocol or application-level termination, security policies, and/or manual intervention by a network administrator and/or a user.

As mentioned before, this may lead to security risks but also or alternatively to undesired disruptions. One goal of the proposed disclosure is, therefore, to is to ensure that the connection between group members, e.g., ECUs in the vehicle's Wi-Fi Direct Group, is always maintained, so that the connection between ECUs during the service (streaming etc.) is always stable even if the connection to the original group owner is disconnected as planned or unexpectedly.

The method 100, therefore, further suggests appointing 120 a second device of the communication group as the group owner. In doing so, it may be determined that the second device takes over the role as group owner if/in the event that the first device leaves the communication session/communication group. In practice, the second device may be appointed proactively as future group owner before the first device leaves the communication session/communication group. In this way, a seamless transition between the first and the second device may be achieved, e.g., transition of tasks, privileges, rights (read/write, IP assignment rights), and/or responsibilities of the group owner.

The method 100 further includes maintaining 130 the communication session or reestablishing a communication session for the communication group with the second device as the group owner if the first device leaves the communication session.

So, e.g., if GO requires connection termination, the connected ECUs will be notified in advance that the connection will be terminated.

For this, the proposed approach suggests a method for a first device being a group owner and for direct wireless communication within a communication group including the group owner and one or more second devices being group clients. The method further first device comprises transmitting information indicating that the first device will leave a communication session of the communication group to one or more group clients of the communication group for appointing one of the group clients as group owner to maintain or reestablish the communication session.

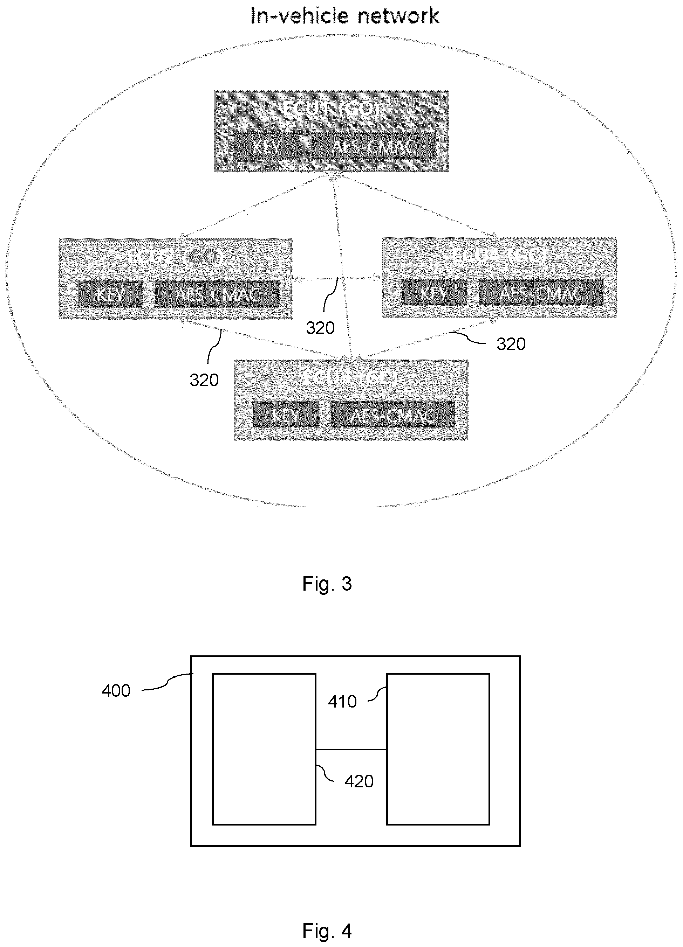

In context the example of Figs. 2 and 3, e.g., the next pre-promised ECU (second device), e.g., ECU2, sends an invitation message to the remaining ECUs (ECU3 and ECU4) as GO (see Fig. 3). After all the second connections are established, GO (first device, ECU1) terminates the existing session. If GO is reset due to an unexpected operation, the next ECU sends an invitation message to become GO immediately so that the Group Session can be recovered or re-established in a short time. After the reset, the previous GO may participate in the communication group as GC.

Respectively, the proposed approach also provides a method for a group client and for direct wireless communication within a communication group including at least one first device being a group owner of the communication group and a second device being the group client. This method suggests determining if the second device is appointed as the group owner. For this, the first device may provide a message indicating that the second device became the group owner to the group client. Further, the method further group client includes maintaining or reestablishing a communication session of the communication group with the second device as group owner of the communication group when the first device leaves the communication session. For this, the group client may accept and/or support the second device to assume the role of the group owner in the negotiation process.

In doing so, the group client may transmit an invite to one or more other group clients of the communication group for the other group clients to establish a connection with the communication group.

In practice, the group client may check if the second device is appointed as the group owner if the first device is about to leave or left the communication session/communication group.

Particularly but not exclusively, in automotive applications, the proposed approach may be applied in ECUs that serve user experience functions (e.g., streaming, infotainment, and/or the like) in order to provide interference-free entertainment.

For a seamless communication session, in a first step first connections between the first device and one or more other devices of the communication group may be established and, for maintaining or reestablishing the communication session, second connections between the second device and one or more other devices for maintaining the communication session may be established.

In particular, for maintaining the communication session, the first connections may be only terminated when the second connections have been established. So, the second connections, may be established before the first device (ECU1) the communication session/communication group.

As the skilled person will appreciate, the proposed approach on the one hand allows to prevent interference between vehicles The signal detection range of the wireless network may be wide, so that a signal of another vehicle may be detected. In this case, there is a possibility that another manufacturer or attacker will participate in the group maliciously. If the security described in here is applied to the secondary type and operated, interference between vehicles can be prevented and the internal network of the vehicle can be protected.

On the other hand, the communication group can be managed as a single group. Whenever multiple ECUs are required, a large number of group/communication may occur when creating a communication group, which means that network management efficiency may be reduced. The proposed approach allows to handle the communication group as a single communication group even if the group owner leaves the communication session. In this way, communication and management of ECUs becomes easier and it can also prevent interference between channels.

Apart from that, the proposed approach allows to maintain connectivity even if GO leaves communication group, e.g., during streaming or large data transmission and reception, the session may be maintained or quickly recovered in order to reduce or ideally avoid interferences.

It is noted, that the term "vehicle/s" is to be interpreted broadly in context of the present disclosure. So, vehicles according to the present disclosure may include any kind of vehicle, including various ground vehicles (e.g., car, truck, bus, motorcycle, and/or the like), various watercrafts (e.g., boat), various aircrafts (e.g., planes, helicopters), and/or a combination thereof (e.g., amphibious vehicle).

It is further noted, that the proposed approach may be at least partly implemented as a computer program and/or computer implemented method. So, steps and/or features of described embodiments may be implemented in a computer program which when it is executed by a computer or any kind of programmable hardware causes the computer or hardware to execute one or more steps or parts of the proposed approach.

Fig. 4 shows a block diagram schematically illustrating an embodiment of such an apparatus 400. The apparatus comprises one or more interfaces 410 for communication and a data processing circuit 420 configured to execute the proposed method.

In embodiments, the one or more interfaces 410 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 420 may correspond to or comprise any type of programable hardware. So, examples of the data processing circuit 420, e.g., comprise a memory, microcontroller, field programable gate arrays, one or more central, and/or graphical processing units. To execute the proposed method, the data processing circuit 420 may be configured to access or retrieve an appropriate computer program for the execution of the proposed method from a memory of the data processing circuit 420 or a separate memory which is communicatively coupled to the data processing circuit 420.

As shown with reference to the examples of Figs. 2 and 3, such apparatus may correspond to a may be part of an ECU for a vehicle. Accordingly, the first and/or the second device may comprise or correspond to an ECU.

It is noted that the proposed approach may be applied in various communication applications. In practice, e.g., it may be applied in any wireless network and/or in one or more nodes of such wireless network. Accordingly, the devices (first and second device) may correspond to or comprise a network node (e.g., a router or a network client).

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for direct wireless communication within a communication group comprising multiple devices, the method (100) comprising:
appointing (110) a first device as the group owner of the communication group;
appointing (120) a second device of the communication group as the group owner; and
maintaining (130) the communication session or reestablishing a communication session for the communication group with the second device as the group owner if the first device leaves the communication session.

2. The method (100) of claim 1, wherein the method (100) comprises establishing first connections between the first device and one or more other devices of the communication group, wherein maintaining or reestablishing the communication session comprises establishing second connections between the second device and one or more other devices for maintaining the communication session.

3. The method (100) of claim 2, wherein maintaining the communication session comprises terminating the first connections when the second connections are established.

4. The method (100) of any one of the preceding claims, wherein at least one of the devices in the communication group comprises an electronic control unit, ECU, for a vehicle.

5. A method for a first device being a group owner and for direct wireless communication within a communication group including the group owner and one or more second devices being group clients, the method (100) comprising:
transmitting information indicating that the first device will leave a communication session of the communication group to one or more group clients of the communication group for appointing one of the group clients as group owner to maintain or reestablish the communication session.

6. A method for a group client and for direct wireless communication within a communication group including at least one first device being a group owner of the communication group and a second device being the group client, the method (100) comprising:
determining if the second device is appointed as the group owner; and
maintaining or reestablishing a communication session of the communication group with the second device as group owner of the communication group when the first device leaves the communication session.

7. The method of claim 6, wherein maintaining or reestablishing the communication session comprises transmitting an invite to one or more other group clients of the communication group for the other group clients to establish a connection with the communication group.

8. The method of claim 6 or 7, wherein determining if the second device is appointed as the group owner comprises determining if the second device is appointed as the group owner when the first device leaves the communication session and determining if the first device leaves or left the communication session.

9. A computer program comprising instructions which, when the computer program is executed by a computer, cause the computer to carry out a method (100) of any one of the claims 1 to 8.

10. A computer-readable data carrier having stored thereon the computer program of claim 9.

11. An apparatus (400) comprising:
one or more interfaces (410) for communication; and
a data processing circuit (420) configured to execute a method (100) of any one of the claims 1 to 8.
